# EUROPÄISCHE PATENTSCHRIFT

(11) **EP 1 136 625 B1**
(45) Veröffentlichungstag und Bekanntmachung des Hinweises auf die Patenterteilung: **07.06.2006**
(21) Anmeldenummer: 01105847.6
(22) Anmeldetag: 09.03.2001
(51) Int. Cl.: E01H 5/06, B62D 49/04, B62D 49/06

(54) **Tragvorrichtung für den Anbau eines Anbaugeräts an ein Trägerfahrzeug**
Implement supporting device for a carrier vehicle
Dispositif de support d'accessoires pour un véhicule porteur

(30) Priorität: 18.03.2000 DE 10013480
(43) Veröffentlichungstag der Anmeldung: 26.09.2001
(73) Patentinhaber: Schmidt Holding GmbH, 70794 Filderstadt-Bonlanden (DE)
(72) Erfinder: Hirt, Roswitha, 79872 Bernau (DE); Meissner, Uwe, 79872 Bernau (DE)
(74) Vertreter: Grättinger & Partner (GbR)

(56) Entgegenhaltungen:
- EP-A- 0 467 310
- WO-A-86/00352

## Beschreibung

Die vorliegende Erfindung betrifft eine Tragvorrichtung für den Anbau eines Anbaugeräts an ein Trägerfahrzeug, umfassend ein geräteseitiges Tragteil, eine fahrzeugseitige Tragplatte, ein zwischen dem Tragteil und der Tragplatte angeordnetes Verbindungssystem sowie eine Rückstelleinrichtung, wobei das Verbindungssystem für eine Pendelbewegung des Tragteils dessen Parallelverdrehung relativ zur Tragplatte ermöglicht und die Rückstelleinrichtung dergestalt doppelt wirkend ausgeführt ist, daß sie auf das aus einer Nullage verdrehte Tragteil eine Rückstellkraft ausübt, so daß das Tragteil um die Nullage, die das Tragteil unter Einwirkung der Rückstelleinrichtung bei Abwesenheit äußerer Kräfte einnimmt, herum Pendelbewegungen ausführen kann.

Tragvorrichtungen der vorstehend angegebenen Art werden insbesondere eingesetzt zum Anbau von Schneepflügen an Winterdienstfahrzeuge. Eine gattungsgemäße Tragvorrichtung geht dabei beispielsweise aus der europäischen Patentschrift 0467310 als bekannt hervor. Die Parallelverdrehbarkeit des Tragteils relativ zur Tragplatte ermöglicht dabei eine Pendelbewegung der Pflugschar, d. h. eine Ausgleichsbewegung zur Anpassung der Pflugschar an örtlich unterschiedliche Neigungen der Fahrbahn. In gleicher Weise ermöglicht die Parallelverdrehbarkeit von Tragteil und Tragplatte zueinander einen Ausgleich der Wankbewegung des Trägerfahrzeugs, insbesondere beim Durchfahren von Kurven.

Die WO 86/00352 A1 offenbart eine weitere Tragvorrichtung. Bei dieser ist das Tragteil über vier Streben starr mit zwei Führungsleisten verbunden, welche in zwei Führungsschienen der Tragplatte vertikal verschiebbar geführt sind. Um eine Pendelbewegung der Pflugschar zu ermöglichen, sind die beiden Führungsleisten dabei ballig nach außen gekrümmt ausgeführt, so daß sich die aus dem Tragteil, den vier Streben und den beiden Führungsleisten bestehende Einheit relativ zu der Tragplatte um eine horizontale Achse verdrehen kann. Indem der Hubzylinder, der sich einerseits an der Tragplatte abstützt, an einem die beiden Führungsleisten verbindenen Rahmenbügel oberhalb der Drehachse angelenkt ist, erfolgt bei angehobener Pflugschar in Abwesenheit äußerer Kräfte eine schwerkraftbedingte Rückstellung des Tragteils in eine Nullage. Bei abgesenkter Pflugschar mit in Schwimmstellung geschaltetem Hubzylinder wirken indessen keine Rückstellkräfte.

Bekannt sind des weiteren (vgl. EP 0181454 A3) Tragvorrichtungen, die sich von Tragvorrichtungen der gattungsgemäßen Art im wesentlichen allein dadurch unterscheiden, daß eine doppelt wirkende Rückstelleinrichtung nicht vorgesehen ist. Bei Verwendung dieser Tragvorrichtungen ergibt sich eine freie, keiner Rückstellkraft unterliegende Pendelbewegung der Pflugschar im Betrieb. Lediglich bei angehobener Pflugschar wird die Pendelbewegung durch eine entsprechende Einrichtung blockiert.

Schließlich sind Tragvorrichtungen für den Anbau eines Anbaugeräts an ein Trägerfahrzeug bekannt, die keinerlei schwimmende Pendelbewegung der Pflugschar zulassen, bei denen allerdings die Seitenneigung der Pflugschar einstellbar ist. Gemäß der CH 665237 A5 umfaßt zu diesem Zweck das das Tragteil und die Tragplatte miteinander verbindende Lenkersystem zwei Hubzylinder, die zum Anheben der Pflugschar gemeinsam, zur Verstellung der Seitenneigung der Pflugschar hingegen einzeln betätigt werden.

Sämtliche vorstehend gewürdigten bekannten Tragvorrichtungen erweisen sich hinsichtlich ihrer Funktionalität als nicht optimal. Dies gilt sowohl für die bekannten gattungsgemäßen Tragvorrichtungen gemäß der EP 0467310 B1 wie auch für die übrigen bekannten Tragvorrichtungen.

Demgemäß liegt der vorliegenden Erfindung die Aufgabe zugrunde, eine Tragvorrichtung der eingangs angegebenen Art zu schaffen, die sich durch eine besonders gute Funktionalität auszeichnet. Die vorliegende Erfindung zielt mit anderen Worten darauf ab, eine Tragvorrichtung der gattungsgemäßen Art zu schaffen, die unter sämtlichen Betriebsbedingungen eine optimale Funktion des jeweiligen Anbaugeräts ermöglicht.

Gemäß der vorliegenden Erfindung wird diese Aufgabe dadurch gelöst, daß ein Neigungsverstellantrieb vorgesehen ist, der derart auf die Rückstelleinrichtung wirkt, daß die Nullage des Tragteils veränderbar ist. Die erfindungsgemäße Tragvorrichtung zeichnet sich mit anderen Worten dadurch aus, daß die für die Parallelverdrehung (Pendelbewegung) des Tragteils relativ zur Tragplatte maßgebliche Nullage, die das Tragteil unter Einwirkung der Rückstelleinrichtung bei Abwesenheit äußerer Kräfte einnimmt, mittels eines Neigungsverstellantriebs verstellbar ist. Wesentlich ist dabei allerdings, daß der Neigungsverstellantrieb auf die Rückstelleinrichtung wirkt, so daß das Tragteil unabhängig von der momentan eingestellten Nullage um diese herum Pendelbewegungen ausführen kann, wobei jeweils das Tragteil durch die Rückstelleinrichtung in die momentan eingestellte Nullage vorgespannt ist. Die vorliegende Erfindung ermöglicht somit eine aktive Vorgabe der Seitenneigung des angebauten Anbaugeräts, ohne dessen Pendelbewegung um die eingestellte Nullage herum und/oder einen Ausgleich der Wankbewegung des Trägerfahrzeugs zu beeinträchtigen. Im Ergebnis läßt sich bei Verwendung der erfindungsgemäßen Tragvorrichtung das Anbaugerät optimal an die für den jeweiligen Einsatz maßgeblichen Bedingungen anpassen. Diese optimierte Funktionalität ist von besonderem Vorteil, wenn mittels ein und derselben Tragvorrichtung verschiedene Anbaugeräte an ein Trägerfahrzeug angebaut werden sollen.

Eine erste bevorzugte Weiterbildung der Erfindung zeichnet sich dadurch aus, daß das Verbindungssystem als Lenkersystem, das mindestens drei Lenker umfaßt, ausgeführt ist, wobei mindestens ein Lenker sowohl mit der Tragplatte wie auch mit dem Tragteil mittels eines Raumgelenks verbunden ist. Bei dieser Gestaltung des Verbindungssystems ergibt sich die Parallelverdrehbarkeit des Tragteils relativ zur Tragplatte durch Verwinden der einzelnen Lenker des Lenkersystems zueinander. Dies resultiert in einem vergleichsweise geringen apparativen Aufwand und somit in einer robusten und kostengünstigen Konstruktion der Tragvorrichtung.

Bei dem vorstehend beschriebenen Lenkersystem können zwei Lenker ein miteinander gekoppeltes Lenkerpaar bilden, das an der Tragplatte über ein eindimensionales Schwenkgelenk angelenkt ist, wobei das Lenkerpaar an dem Tragteil und der dritte Lenker an dem Tragteil sowie der Tragplatte mittels jeweils eines Raumgelenks angelenkt ist. Das Lenkerpaar überträgt dabei Seitenkräfte von dem Tragteil auf die Tragplatte. Die Anlenkung des Lenkerpaares an dem Tragteil über ein Raumgelenk gestattet ein Verdrehen des Tragteils relativ zur Tragplatte im Bereich jenes Raumgelenks. In diesem Zusammenhang ist darauf hinzuweisen, daß im Rahmen der vorliegenden Erfindung der Begriff "Parallelverdrehung" nicht mathematisch exakt zu verstehen ist. Denn infolge der Verwindung des Einzellenkers relativ zum Lenkerpaar ergibt sich eine Verkürzung des Lenkers in der Projektion senkrecht zur Pendelachse, so daß sich die Pendelbewegung als Überlagerung einer Parallelverdrehung und einer (geringfügigen) Veränderung der Schrägstellung des Tragteils relativ zur Tragplatte ergibt.

Eine besonders bevorzugte Weiterbildung der vorliegenden Erfindung zeichnet sich dadurch aus, daß sich der Neigungsverstellantrieb an dem Lenkerpaar abstützt, wobei die Rückstelleinrichtung auf den verbleibenden bzw. einen der verbleibenden Lenker wirkt. Einer der maßgeblichen Vorteile dieser Gestaltung liegt darin, daß sie eine Umrüstung herkömmlicher gattungsgemäßer Tragvorrichtungen zu solchen gemäß der vorliegenden Erfindung mit minimalem Aufwand ermöglicht. Von besonderem Vorteil ist es dabei, wenn die Rückstelleinrichtung ein doppelt wirkendes Federelement und eine von diesem beaufschlagte Schwinge umfaßt, wobei die Schwinge an einem Lagerbock gelagert ist, welcher mit dem Lenkerpaar fest verbunden ist. Die Schwinge kann dabei insbesondere als Gabelelement ausgeführt sein, das den dritten Lenker umgreift. Für den Neigungsverstellantrieb eignet sich dabei in besonderer Weise ein Hydraulikzylinder, der an dem Lagerbock abgestützt ist und an dessen Kolbenstange das doppelt wirkende Federelement montiert ist, das mit einem Anschlußteil der Schwinge in Verbindung steht. In diesem Falle ergibt sich eine besonders kompakte Baueinheit aus Rückstelleinrichtung und Neigungsverstellantrieb. Dies begünstigt wiederum die nachträgliche Umrüstung bekannter Tragvorrichtungen zu solchen nach der vorliegenden Erfindung.

Die Schwinge braucht dabei kein starres Bauteil zu sein. Vielmehr kommt beispielsweise auch eine scherenartige Bauweise der Schwinge in Betracht, bei der zwei an einem Träger angelenkte, durch Federn gegeneinander vorgespannte Gabelteile den dritten Lenker umgreifen. Dies stellt eine integrierte Bauweise von Schwinge und doppelt wirkendem Federelement dar. Der Neigungsverstellantrieb wirkt dabei auf den Träger der Schwinge; und je nach der Auslenkung des Tragteils wird das eine oder das andere Gabelteil gegen die Vorspannkraft abgehoben.

Im Folgenden wird die vorliegende Erfindung anhand eines in der Zeichnung veranschaulichten bevorzugten Ausführungsbeispiels näher erläutert. Die Zeichnung zeigt dabei in perspektivischer Ansicht schräg von vorn Lenkersystem, Neigungsverstellantrieb und Rückstelleinrichtung einer Tragvorrichtung nach der Erfindung; Tragteil und Tragplatte wurden dabei aus Gründen der Darstellung weggelassen.

Gemäß der Zeichnung umfaßt das Lenkersystems 1 insgesamt drei Lenker 2, 3 und 4. Die Lenker 2 und 3 bilden dabei ein Lenkerpaar; sie sind über ein Verbindungsteil 5 starr miteinander verbunden. Die Lenker 2 und 3 konvergieren dabei zur Bildung eines auf die Abstützung von Seitenkräften ausgerichteten Dreieckslenkerpaares.

Das die Lenker 2 und 3 umfassende Lenkerpaar ist an der - nicht dargestellten - fahrzeugseitigen Tragplatte um die horizontale Achse 6 schwenkbar (Doppelpfeil A) angelenkt. Hierzu verfügen die Lenker 2 und 3 endseitig über jeweils ein Auge 7, das Teil der betreffenden gelenkigen Verbindung zur Tragplatte ist.

Der Lenker 4 ist hingegen mit der Tragplatte über ein Raumgelenk verbunden. Hierzu verfügt er endseitig über einen Kugelkopf 8.

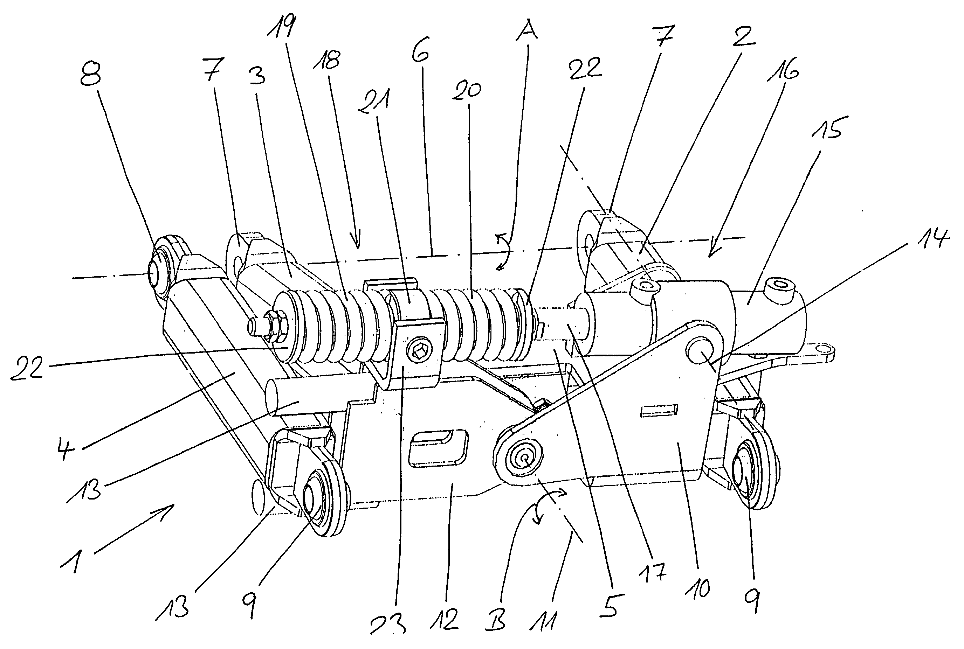

Mit dem - nicht dargestellten - geräteseitigen Tragteil ist sowohl das die Lenker 2 und 3 umfassende Lenkerpaar wie auch der Lenker 4 über jeweils ein Raumgelenk verbunden. Hierzu verfügen sowohl der Lenker 2 wie auch der Lenker 4 jeweils über einen Kugelkopf 9. Insoweit entspricht die in der Zeichnung veranschaulichte Tragvorrichtung dem Stand der Technik gemäß den Fig. 5 und 6 der EP 0467310 A1. Auf weitergehende Erläuterungen wird daher verzichtet.

Mit dem Verbindungsteil 5 des die Lenker 2 und 3 umfassenden Lenkerpaares ist ein Lagerbock 10 fest verbunden. In diesem ist um die Achse 11 eine Schwinge 12 verschwenkbar (Doppelpfeil B) gelagert. Die Schwinge 12 ist als Gabelelement ausgeführt. Sie umfaßt zwei Zinken 13, die den Lenker 4 umgreifen.

An dem Lagerbock 10 ist des weiteren um die Achse 14 verschwenkbar (Doppelpfeil C) ein Hydraulikzylinder 15 gelagert, der Kernstück eines Neigungsverstellantriebs 16 ist. Auf der Kolbenstange 17 ist ein doppelt wirkendes Federelement 18 montiert, welches zwei Schraubenfedern 19 und 20 sowie ein zwischen diesen eingespanntes Ringteil 21 umfaßt. Die beiden Schraubenfedern 19 und 20 stützen sich jeweils außen an Scheiben 22 ab, welche mit der Kolbenstange 17 fest verbunden sind.

Das Ringteil 21 des doppelt wirkenden Federelements 18 ist mit einem gabelförmigen Anschlußteil 23 verbunden, das seinerseits fest mit der Schwinge 12 verbunden ist.

Eine Parallelverdrehung des Tragteils relativ zur Tragplatte führt zu einer Verwindung des Lenkers 4 relativ zu dem die Lenker 2 und 3 umfassenden Lenkerpaar. Die Schwinge 12 wird dabei um die Achse 11 herum aus ihrer Nullage, in welcher die von den Schraubenfedern 19 und 20 auf das Ringteil 21 ausgeübten Kräfte einander aufheben, ausgelenkt. Das doppelt wirkende Federelement 18, das zusammen mit der Schwinge 12 die Rückstelleinrichtung bildet, übt bei Auslenkung des Ringteils 21 aus seiner Mittellage eine Rückstellkraft auf die Schwinge 12 aus, welche ihrerseits das Tragteil in seine Nullage vorspannt.

Der durch den Hydraulikzylinder 15 gebildete Neigungsverstellantrieb 16 wirkt unmittelbar auf die Rückstelleinrichtung. Durch ein- bzw. ausfahren der Kolbenstange 17 in den bzw. aus dem Hydraulikzylinder 15 bei entsprechender Beaufschlagung läßt sich die der Nullage des Tragteils entsprechende Nullstellung der Schwinge 12 verstellen. Demgemäß lassen sich mittels des Neigungsverstellantriebs 16 verschiedene Nullagen des Tragteils relativ zur Tragplatte vorgeben, um die herum das Tragteil beidseitige Pendelbewegungen jeweils gegen die Kraft der Rückstelleinrichtung ausführen kann.

## Patentansprüche

1. Tragvorrichtung für den Anbau eines Anbaugeräts an ein Trägerfahrzeug, umfassend ein geräteseitiges Tragteil, eine fahrzeugseitige Tragplatte, ein zwischen dem Tragteil und der Tragplatte angeordnetes Verbindungssystem sowie eine Rückstelleinrichtung, wobei das Verbindungssystem für eine Pendelbewegung des Tragteils dessen Parallelverdrehung relativ zur Tragplatte ermöglicht und die Rückstelleinrichtung dergestalt doppelt wirkend ausgeführt ist, daß sie auf das aus einer Nullage verdrehte Tragteil eine Rückstellkraft ausübt, so daß das Tragteil um die Nullage, die das Tragteil unter Einwirkung der Rückstelleinrichtung bei Abwesenheit äußerer Kräfte einnimmt, herum Pendelbewegungen ausführen kann,
**dadurch gekennzeichnet,**
**daß** ein Neigungsverstellantrieb (16) vorgesehen ist, der derart auf die Rückstelleinrichtung wirkt, daß die Nullage des Tragteils veränderbar ist.

2. Tragvorrichtung nach Anspruch 1,
**dadurch gekennzeichnet,**
**daß** das Verbindungssystem als Lenkersystem (1), das mindestens drei Lenker (2, 3, 4) umfaßt, ausgeführt ist, wobei mindestens einer der Lenker (4) sowohl mit der Tragplatte wie auch mit dem Tragteil mittels eines Raumgelenks verbunden ist.

3. Tragvorrichtung nach Anspruch 2,
**dadurch gekennzeichnet,**
**daß** zwei der Lenker (2, 3) ein miteinander gekoppeltes Lenkerpaar bilden, das an der Tragplatte über ein eindimensionales Schwenkgelenk angelenkt ist, wobei das Lenkerpaar an dem Tragteil mittels eines Raumgelenks angelenkt ist.

4. Tragvorrichtung nach Anspruch 3,
**dadurch gekennzeichnet,**
**daß** sich der Neigungsverstellantrieb (16) an dem Lenkerpaar abstützt, wobei die Rückstelleinrichtung auf den/einen der verbleibenden Lenker (4) wirkt.

5. Tragvorrichtung nach Anspruch 3 oder Anspruch 4,
**dadurch gekennzeichnet,**
**daß** die Rückstelleinrichtung ein doppelt wirkendes Federelement (18) und eine von diesem beaufschlagte Schwinge (12) umfaßt, wobei die Schwinge (12) an einem Lagerbock (10) gelagert ist, welcher mit dem Lenkerpaar fest verbunden ist.

6. Tragvorrichtung nach Anspruch 5,
**dadurch gekennzeichnet,**
**daß** an dem Lagerbock (10) ein Hydraulikzylinder (15) abgestützt ist, an dessen Kolbenstange (17) das doppelt wirkende Federelement (18) montiert ist, das mit einem Anschlußteil (23) der Schwinge (12) in Verbindung steht.

7. Tragvorrichtung nach Anspruch 5 oder Anspruch 6,
**dadurch gekennzeichnet,**
**daß** die Schwinge (12) als Gabelelement ausgeführt ist, das den dritten Lenker (4) umgreift.

## Claims

1. Supporting device for mounting an accessory implement to a carrier vehicle, comprising an implement-sided supporting element, a vehicle-sided supporting plate, a connecting system arranged between the supporting element and the supporting plate as well as a reset device, the connecting system enabling a parallel torsion of the supporting element for a pendular movement of the same relatively to the supporting plate, and the reset device being designed to double-act in such a way that it exerts a reset force on the supporting element contorted from a neutral position, so that the supporting element may perform pendular movements around the neutral position which the supporting element adopts under the influence of the reset device in the absence of external forces,
**characterized in that**
an inclination adjustment drive (16) is provided which acts on the readjustment device in such a way that the neutral position of the supporting element is changeable.

2. Supporting device according to claim 1,
**characterized in that** the connecting system is designed as rod system (1) comprising at least three rod elements (2, 3, 4), at least one of the rod elements (4) being connected via a three-dimensional joint both with the supporting plate as well as with the supporting element.

3. Supporting device according to claim 2,
**characterized in that**
two of the rod elements (2, 3) form a coupled pair of rod elements which is joined to the supporting plate via a one-dimensional swivel joint, the pair of rod elements being joined to the supporting element via a three-dimensional joint.

4. Supporting device according to claim 3,
**characterized in that**
the inclination adjustment drive (16) is supported on the pair of rod elements, the reset device acting on the/one of the remaining rod element(s) (4).

5. Supporting device according to claim 3 or claim 4,
**characterized in that**
the reset device comprises a double-acting spring element (18) and a rocker (12) upon which the spring element acts, the rocker (12) being supported on a bearing block (10) which is fixedly connected to the pair of rod elements.

6. Supporting device according to claim 5,
**characterized in that**
a hydraulic cylinder (15) is supported on the bearing block (10), on the piston rod (17) of which the double-acting spring element (18) is mounted, which is connected to a connecting piece (23) of the rocker (12) .

7. Supporting device according to claim 5 or claim 6,
**characterized in that**
the rocker (12) is designed as fork element which encompasses the third rod element (4).

## Revendications

1. Dispositif de support pour le montage d'un accessoire sur un véhicule porteur, comprenant une partie porteuse du côté de l'accessoire, une plaque porteuse du côté du véhicule et entre ceux-ci, un système de liaison ainsi qu'un dispositif de rappel, le dispositif de liaison pour assurer un mouvement pendulaire de la partie porteuse permettant à celle-ci de se déplacer parallèlement à la plaque porteuse et le dispositif de rappel étant réalisé à double action, de manière qu'il exerce sur la partie porteuse partant d'une position zéro, une force de rappel, faisant que cette partie porteuse, autour de la position zéro qu'elle prend sous l'action du dispositif de rappel en l'absence de forces externes, peut exécuter des mouvements pendulaires, **caractérisé en ce qu'**il est prévu un dispositif de réglage d'inclinaison (16) qui agit sur le dispositif de rappel, de manière que la position zéro de la partie porteuse peut être modifiée.

2. Dispositif de support selon la revendication 1, **caractérisé en ce que** le système de liaison est un système de bielles (1) composé d'au moins trois bielles (2, 3, 4) dont au moins une (4) est reliée à la plaque porteuse et également à la partie porteuse par l'intermédiaire d'une articulation tridimensionnelle.

3. Dispositif de support selon la revendication 2, **caractérisé en ce que** deux des bielles (2, 3) forment une paire de bielles accouplées qui est articulée à la plaque porteuse par l'intermédiaire d'une articulation de basculement unidimensionnelle, la paire de bielles étant articulée à la partie porteuse par l'intermédiaire d'une articulation tridimensionnelle.

4. Dispositif de support selon la revendication 3, **caractérisé en ce que** l'entraînement de réglage d'inclinaison (16) s'appuie sur la paire de bielles et le dispositif de rappel agit sur la ou sur une des bielles restantes (4).

5. Dispositif de support selon la revendication 3 ou 4, **caractérisé en ce que** le dispositif de rappel est un élément élastique (8) à double action et il comprend une bielle oscillante (12) montée sur un support de palier (10) qui est solidaire de la paire de bielles.

6. Dispositif de support selon la revendication 5, **caractérisé en ce que** sur le support de palier (10) s'appuie un vérin hydraulique (15) sur la tige de piston (17) duquel est monté l'élément élastique (8) à double action qui est en liaison avec une partie de raccordement (23) de la bielle oscillante (12).

7. Dispositif de support selon la revendication 5 ou 6, **caractérisé en ce que** la bielle (12) est un élément en forme de fourche qui est en prise par l'extérieur avec la troisième bielle (4).
